(19) Europäisches Patentamt
European Patent Office
Office européen des brevets

(11) **EP 3 798 710 B1**

(12) **FASCICULE DE BREVET EUROPEEN**

(45) Date de publication et mention de la délivrance du brevet:
**13.09.2023 Bulletin 2023/37**

(51) Classification Internationale des Brevets (IPC):
**G02B 17/06** (2006.01)   **G02B 23/06** (2006.01)
**G02B 27/00** (2006.01)

(21) Numéro de dépôt: **20198510.8**

(22) Date de dépôt: **25.09.2020**

(52) Classification Coopérative des Brevets (CPC):
**G02B 17/0663; G02B 17/0694;** G02B 23/06;
G02B 27/0012

(54) **TELESCOPE DE TYPE CASSEGRAIN A PLAN DE FOCAL SEGMENTE**

TELESKOP VOM TYP CASSEGRAIN-TELESKOP MIT SEGMENTIERTER BRENNEBENE

CASSEGRAIN TYPE TELESCOPE WITH SEGMENTED FOCAL PLANE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2019 FR 1910625**

(43) Date de publication de la demande:
**31.03.2021 Bulletin 2021/13**

(73) Titulaires:
 • **THALES**
   **92400 Courbevoie (FR)**
 • **Universite d'Aix-Marseille**
   **13007 Marseille (FR)**
 • **Centre national de la recherche scientifique**
   **75016 Paris (FR)**

(72) Inventeurs:
 • **HEIN, Grégoire**
   **13388 MARSEILLE Cedex 13 (FR)**
 • **FERRARI, Marc**
   **13388 MARSEILLE Cedex 13 (FR)**
 • **TETAZ, Nicolas**
   **06156 CANNES LA BOCCA (FR)**
 • **JAHN, Wilfried**
   **13388 MARSEILLE Cedex 13 (FR)**
 • **HUGOT, Emmanuel**
   **13388 MARSEILLE Cedex 13 (FR)**

(74) Mandataire: **Atout PI Laplace**
   **Immeuble "Visium"**
   **22, avenue Aristide Briand**
   **94117 Arcueil Cedex (FR)**

(56) Documents cités:
   **US-A1- 2010 202 073    US-A1- 2018 164 573**

 • **DOLKENS DENNIS ET AL: "Design and end-to-end modelling of a deployable telescope", PROCEEDINGS OF SPIE; [PROCEEDINGS OF SPIE ISSN 0277-786X VOLUME 10524], SPIE, US, vol. 10562, 25 septembre 2017 (2017-09-25), pages 1056227-1056227, XP060093809, DOI: 10.1117/12.2296169 ISBN: 978-1-5106-1533-5**

**Description**

**DOMAINE DE L'INVENTION**

Le domaine de l'invention est celui des télescopes, notamment celui des télescopes d'observations embarqués dans des satellites. Plus précisément, le domaine de l'invention concerne les systèmes catoptriques à haute résolution et grand champ.

**ETAT DE LA TECHNIQUE**

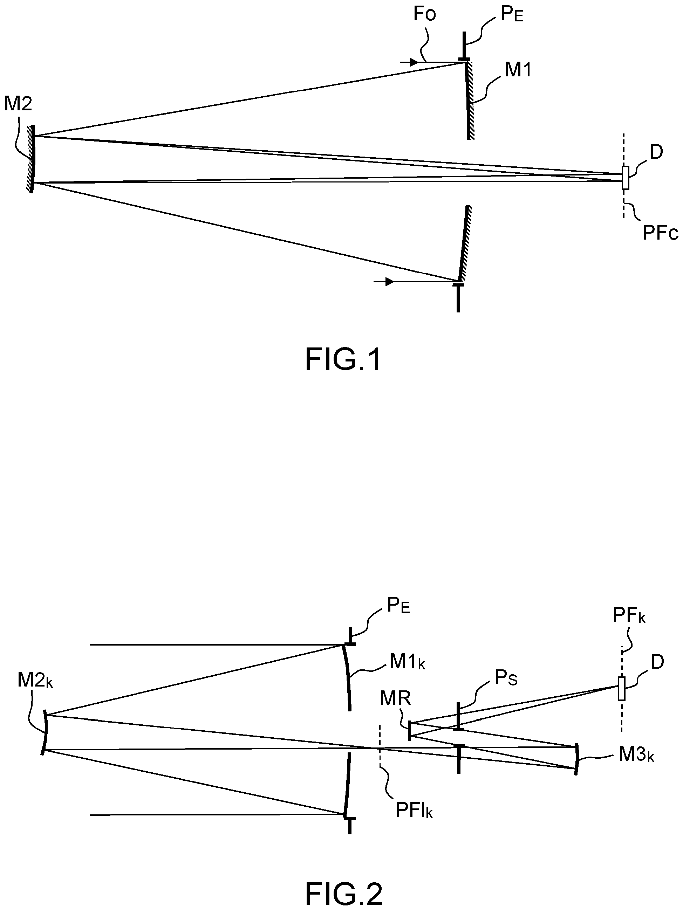

Historiquement les premiers télescopes étaient des lunettes (à lentilles). Puis les premiers télescopes catadioptriques étaient de type Newton (un seul miroir), les télescopes à deux miroirs de type Cassegrain/Ritchey-Chrétien sont arrivés ensuite. Ces télescopes comprennent deux miroirs, un premier miroir M1 concave et un deuxième miroir M2 convexe configurés pour réaliser une image d'un faisceau lumineux F0 provenant de l'infini dans un plan focal PFc, dans lequel est disposé un détecteur, tel qu'illustré figure 1.

Ce système optique présente un axe optique O bien connu de l'homme de l'art, défini par le rayon passant par le centre de la pupille d'entrée $P_E$ et perpendiculaire à cette pupille.

Les différents éléments (miroirs M1, M2 et détecteur) du télescope sont agencés selon un ordre, des positions et des caractéristiques optiques qui définissent la combinaison optique du télescope. Le télescope présente une pupille d'entrée PE et une pupille de sortie, notions bien connues de l'homme de l'art. La pupille d'entrée de ce télescope est constituée par le diamètre du M1.

Un télescope est caractérisé de manière connue par les paramètres suivants :

- une focale f,

- une ouverture : rapport de la focale f sur le diamètre D du M1, paramétrée en f/nombre entier,

- un champ de vue qui est l'angle solide observé par l'instrument pour une image présentant une qualité d'image jugée acceptable.

La qualité d'un système optique s'évalue par comparaison entre l'onde lumineuse idéale limitée par la diffraction et l'onde lumineuse réelle à la sortie du système optique tenant compte des défauts du système optique traversé. L'analyse de la différence entre onde théorique et onde réelle permet d'identifier les types de défauts ou aberrations du système optique. Il est connu que les principales aberrations géométriques sont : l'aberration sphérique, l'astigmatisme, la coma, la courbure de champ (défocus dans le champ), et la distorsion (aberrations du 3eme ordre).

Les miroirs M1 et M2 sont parabolique-hyperbolique pour un Cassegrain, hyperbolique-hyperbolique pour le RC, et la combinaison optique de ce type de télescope se détermine de manière connue en fonction des différents paramètres précités et par exemple de la distance d1 entre M1 et M2, ou de la distance d2 entre M2 et le plan focal PF souhaitée.

Le fait d'avoir deux miroirs dans la combinaison optique permet la correction de deux des trois aberrations du 3eme ordre : soit on corrige l'aberration sphérique et la coma (télescope Ritchey-Chrétien), soit on corrige l'aberration sphérique et l'astigmatisme (télescope Cassegrain). Nous dénommerons par la suite ce type de télescope RC/C. En revanche ce type de télescope présente toujours de la courbure de champ (ou courbure de Petzval) et de la distorsion, ce qui limite le champ de vue présentant une qualité d'image suffisante à des valeurs inférieures à 0.5°. Ainsi un télescope Ritchey-Chrétien a généralement un champ linéaire inférieur à 0.8°. C'est la non-correction des aberrations précitées qui fait que le champ de vue est limité.

Il existe par ailleurs d'autres types de télescopes à 2 miroirs tels que « Schmidt & Maksutov », « Grégorien », « Schwarzschild »...

Du fait des limitations précitées les télescopes à 2 miroirs (RC/C ou autre), bien que très compacts, ne sont aujourd'hui plus utilisés pour l'imagerie haute résolution (longue focale) et grand champ. Depuis 20 ans le standard pour les télescopes spatiaux longue focale est le télescope de type « Korsch », tel qu'illustré figure 2, qui permet d'obtenir un champ plus important que celui du Ritchey-Chrétien.

Le télescope de type Korsch, également dénommé TMA (acronyme de l'expression anglo-saxonne « Three Mirrors Anastigmat ») est un télescope anastigmat à trois miroirs asphériques (de type Concave-Convexe-Concave) qui comprend un premier miroir M1k concave, un second miroir M2k convexe et un troisième miroir M3k concave. Les trois miroirs M1k, M2k et M3k sont agencés de sorte que le premier miroir M1k et le second miroir M2k forment d'un objet à l'infini une image intermédiaire $P_{FIK}$ située entre M2k et M3k, ce troisième miroir formant de cette image intermédiaire une image finale dans le plan focal PFk du télescope dans lequel est placé un détecteur D.

Au moins un miroir de renvoi MR permet de rendre le système plus compact. Ce télescope présente une pupille de sortie PS disposée entre M3 et D.

Les trois miroirs permettent de corriger l'ensemble des aberrations du 3<sup>ème</sup> ordre plus la courbure de champ. Il présente suffisamment de degrés de liberté au niveau du design de sa combinaison optique pour corriger la courbure de champ (application des équations de Korsch bien connues de l'homme de l'art), et donc son champ de vue est plus large que pour le RC/C. La solution théorique est de très bonne qualité, ce qui fait tout l'intérêt de ce type de télescope. Typiquement les télescopes de type Korsch présentent un champ de vue compris entre 0 et 3° et des focales de plusieurs mètres, typiquement de 3m à 40 m.

Pour l'observation de la terre ces télescopes fonctionnement selon le principe « push broom » : on réalise une image sur un détecteur constitué d'une barrette linéaire, la rotation du satellite autour de la terre faisant naturellement défiler l'image.

L'augmentation de la résolution et du champ des télescopes d'observation planétaire progresse à marche forcée, dictée par des besoins militaires (reconnaissance, identification) comme civils (gestion des cultures, forêts, grands projets BTP, désastres naturels...). Cette augmentation de la résolution et du champ conduit à travailler avec des plans focaux linéaires devenant de plus en plus encombrants et difficiles à intégrer.

Exemple : Mission à 700km d'altitude pour une résolution au sol (GSD) de 30 cm, une fauchée de 30km et des pixels de 10μm. Le plan focal ferait ainsi 1m de large, ce qui est grand en termes de complexité et intégration du plan focal.

Il devient donc nécessaire de réduire la taille linéaire de ce plan focal afin de remédier aux problèmes énoncés ci-dessus.

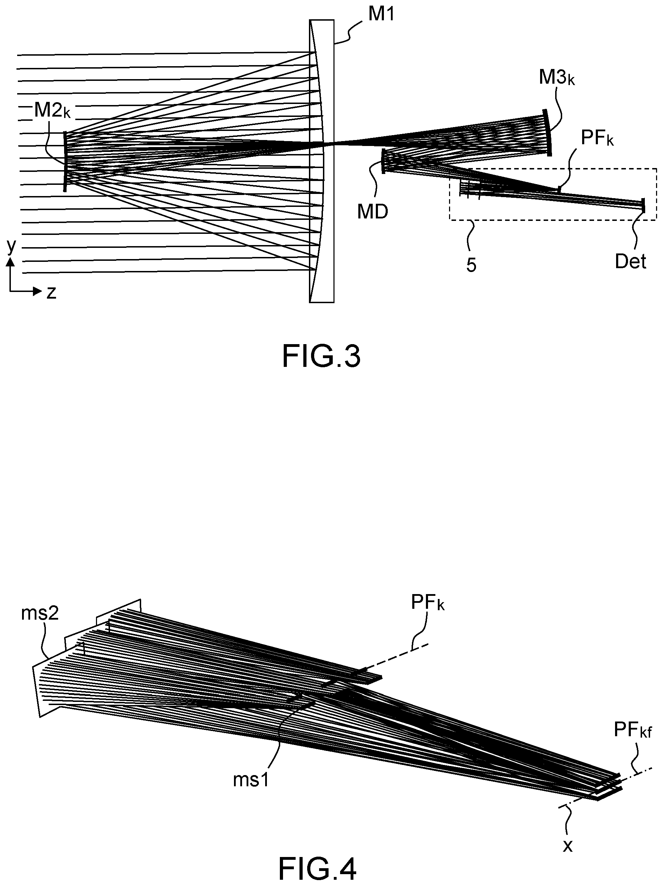

Une solution utilisant un module de segmentation associé à un télescope Korsch, dénommé Korsch Segmenté, est décrit dans la publication « Innovative focal plane design for large space telescope using freeform mirrors » de Jahn et al, Optica, Vol. 4, Issue 10, pp. 1188-1195, (2017) tel qu'illustré figure 3. Un module de segmentation 5 est placé après le plan focal PFk du télescope initial (M1k, M2k, M3k) pour d'abord le découper en imagettes plus petites. Un tel découpage en imagettes est classique dans les optiques d'observation de la terre. Le télescope comprend également un miroir déformable MD disposé sur la pupille de sortie du télescope Korsch initial pour en améliorer la qualité d'image. De manière innovante dans la publication Jahn ces imagettes sont ensuite réimagées et réagencées les unes sous les autres sur un détecteur Det (détecteur unique, barrettes superposées, mosaïques de détecteurs élémentaires...) réduisant la taille linéaire du plan focal d'un facteur sensiblement égal au nombre d'imagettes. De ce fait, le plan focal du télescope initial devient une image intermédiaire et le plan focal final PFkf du télescope est réduit à un détecteur unique bien plus petit. Le module 5 réalise ici une double fonction : segmentation en imagettes et réagencement de ces imagettes dans le plan du détecteur.

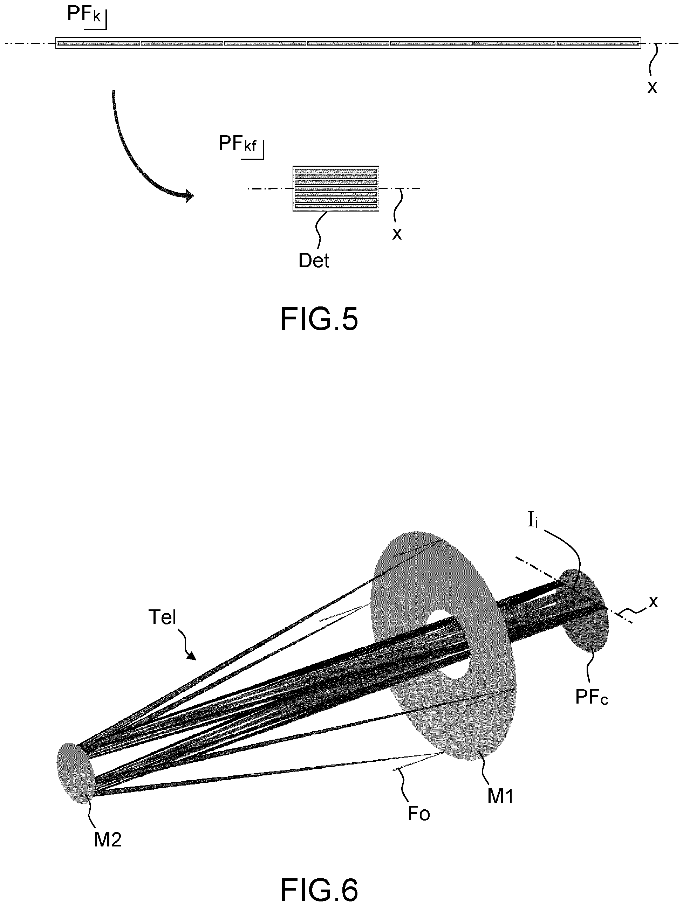

Le module de segmentation 5 comprend un ensemble de miroirs de segmentation ms1, disposé en aval du plan focal PFk du télescope initial, pour réaliser les imagettes en découpant le champ total en une pluralité de sous champs, et comprend un ensemble de miroirs de refocalisation ms2 pour former les images finales dans le plan focal PFkf, tel qu'illustré figure 4. Les miroirs ms1 et ms2 sont de type « freeform ». Ainsi au lieu d'un détecteur linéaire DL selon X positionné dans le plan focal initial PFk utilisé dans un Korsch classique, avec un télescope Korsch segmenté on utilise un détecteur Det dont la dimension selon X est réduite, tel qu'illustré figure 5 pour le cas où 7 images initiales alignées selon X dans le plan fogal PFk sont ré-imagées superposées l'une à l'autre dans le plan focal final PFkf.

Le télescope Korsch segmenté utilise un détecteur de dimension réduite mais est en fait de moins bonne qualité d'image qu'un Korsch classique en termes de résolution, qualité d'image et grand champ (voir plus loin). En outre un tel télescope présente un encombrement et un coût très élevé.

Le document US2018/164573 décrit un télescope Korsch de type TMA, multifocal comprenant 3 miroirs et un composant asphérique escamotable, un composant escamotable étant associé à une focale.

La publication « Design and end-to-end modelling of a deployable telescope » de Dolkens et al (proceeding SPIE Vol. 10562, 2017) décrit un télescope TMA off axis, avec un miroir M3 « freeform » et un M1 segmenté.

Le document US2010/202073 décrit un télescope afocal dérivé d'un TMA, comprenant un M1 ellipsoïdal, un M2 arrangé en Cassegrain et un oculaire comprenant deux miroirs M3 et M4.

Un but de la présente invention est de remédier aux inconvénients précités en proposant un télescope segmenté à la fois plus compact et présentant une qualité d'image améliorée par rapport au Korsch segmenté.

## DESCRIPTION DE L'INVENTION

La présente invention a pour objet un télescope comprenant:

- un télescope initial comprenant un premier miroir concave et un deuxième miroir convexe configurés de sorte qu'ils forment d'un faisceau lumineux provenant de l'infini une image dénommée image intermédiaire dans un plan focal dénommé plan focal intermédiaire, ladite image intermédiaire présentant une plus grande dimension selon un axe X perpendiculaire à un axe optique du télescope,

- un module de segmentation comprenant :

  *un premier ensemble de n miroirs de segmentation disposés en aval du plan focal intermédiaire et configurés pour découper l'image intermédiaire issue du plan focal intermédiaire en n imagettes,
  *un deuxième ensemble de n miroirs de refocalisation configurés pour réimager lesdites n imagettes en n images dans un plan focal du télescope, lesdites images étant agencées dans ledit plan focal de manière à réduire la dimension selon X contenant les n images,

- un dispositif de détection (Det) disposé dans ledit plan focal.

Préférentiellement le télescope initial est de type Ritchey-Chrétien ou Cassegrain.

Selon une variante les miroirs du premier ensemble sont disposés dans un même plan P1 perpendiculaire audit axe optique.

Selon un mode de réalisation une distance entre le plan focal intermédiaire et le plan P1 est comprise dans une plage [dseg-20%, dseg+20%] avec dseg distance déterminée au moins en fonction d'une focale du télescope initial et d'un grandissement du module de segmentation selon une loi prédéterminée présentant la forme d'une interpolation polynomiale de degré 2 de type :

$$desg = A + B*fc + C*gs + D*fc^2 + E*fc*gs + F*gs^2$$

les coefficients A à F étant déterminés en fonction d'un champ d'entrée selon l'axe X.

Selon une autre variante les miroirs du premier ensemble et les miroirs du deuxième ensemble sont disposés dans au moins deux plans différents perpendiculaires à l'axe optique, une voie comprenant un miroir de segmentation et un miroir de focalisation associé, une voie présentant une focale associée, toutes les voies étant configurées pour réaliser lesdites images dans ledit plan focal.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

[Fig 1] La figure 1 déjà citée illustre un télescope de type Cassegrain/Ritchey-Chrétien selon l'état de la technique.

[Fig 2] La figure 2 déjà citée illustre un télescope de type Korsch selon l'état de la technique.

[Fig 3] La figure 3 illustre le principe d'un télescope Korsch segmenté selon l'état de la technique.

[Fig 4] La figure 4 déjà cité illustre plus particulièrement le module de segmentation du Korsch segmenté de la figure 3.

[Fig 5] La figure 5 déjà citée illustre le plan focal d'un télescope « push broom » classique et d'un télescope « push broom » segmenté.

[Fig 6] La figure 6 illustre un télescope Cassegrain/ Ritchey-Chrétien utilisé dans un application « push broom » avec un plan focal « utile » selon un axe X.

[Fig 7] La figure 7 illustre une vue de profil d'un télescope selon l'invention.

[Fig 8] La figure 8 illustre une vue de dessus d'un télescope selon l'invention.

[Fig 9] La figure 9 illustre plus particulièrement une vue de profil du module de segmentation du télescope selon l'invention.

[Fig 10] La figure 10 illustre une vue en perspective d'un exemple de module de segmentation du télescope selon l'invention.

[Fig 11] La figure 11 illustre les distances et paramètres optiques d'intérêt d'un télescope Cassegrain/Ritchey-Chrétien.

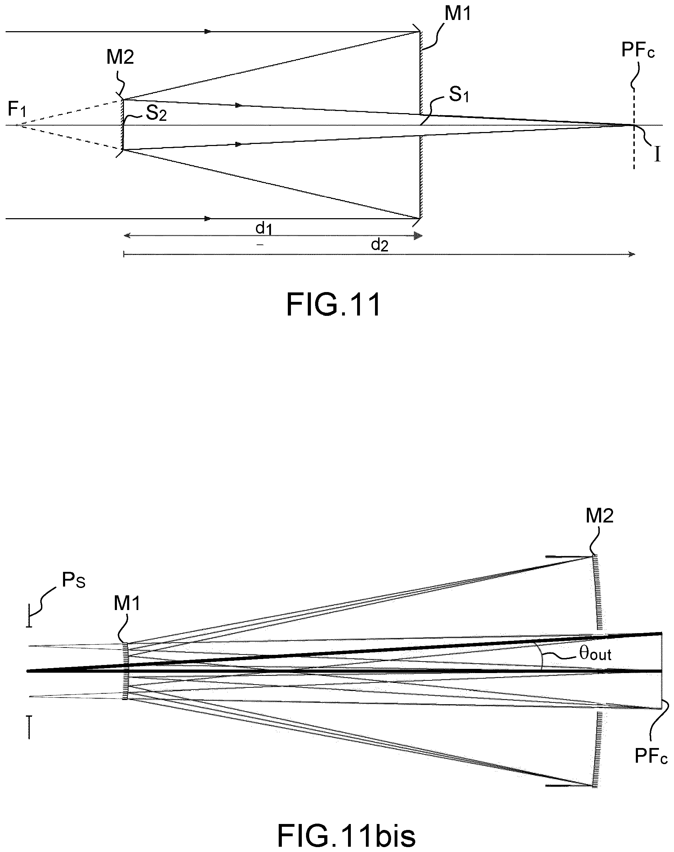

[Fig 11bis] La figure 11bis illustre le rayon principal de bord de champ et l'angle selon X qu'il fait avec l'axe optique du système.

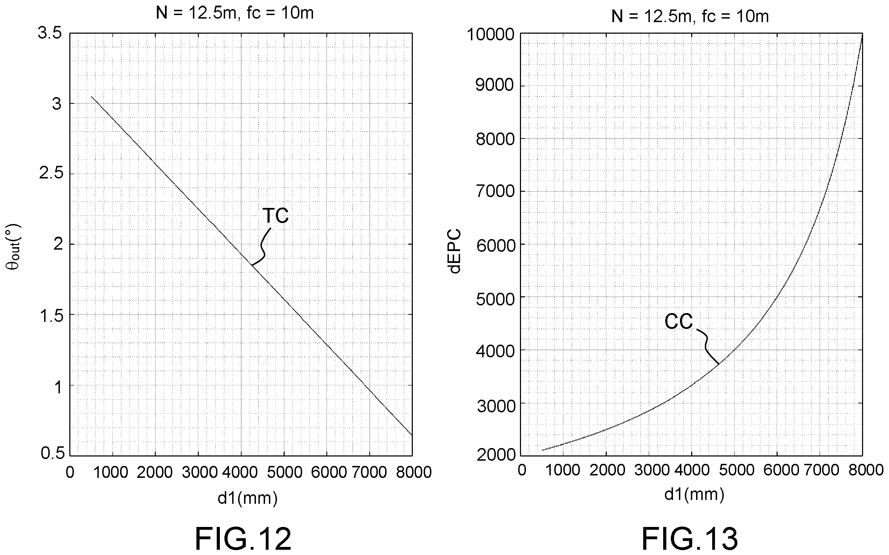

[Figure 12] La figure 12 illustre l'évolution de l'angle de sortie en fonction de la distance d1 entre M1 et M2, pour un télescope Cassegrain/Ritchey-Chrétien.

[Fig 13] La figure 13 illustre l'évolution de la distance $d_{EPC}$ entre la pupille de sortie d'un télescope Cassegrain/Ritchey-Chrétien et le plan focal (plan image, correspondant au plan image intermédiaire du télescope selon l'invention) en fonction de la distance d1 entre M1 et M2.

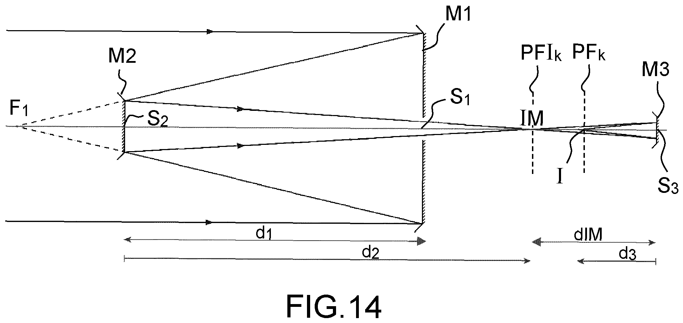

[Fig 14] La figure 14 illustre les distances et paramètres optiques d'intérêt d'un télescope Korsch.

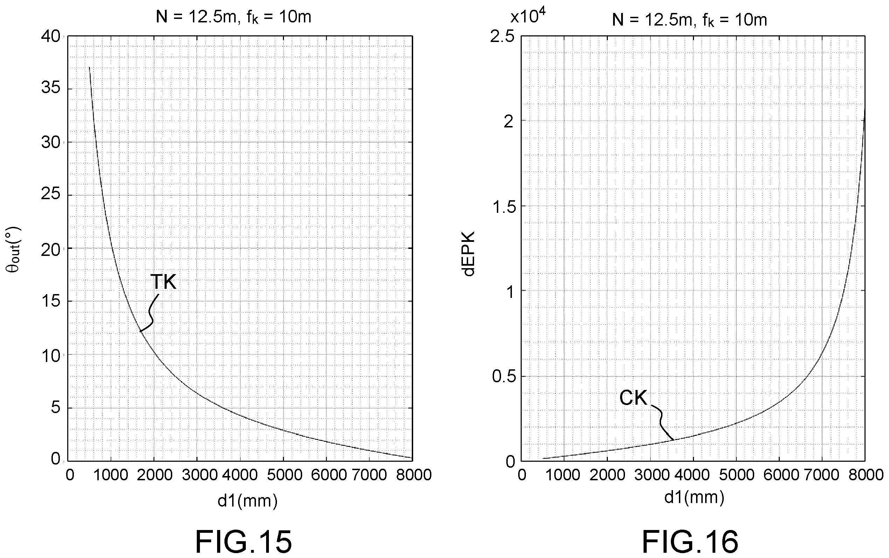

[Fig 15] La figure 15 illustre l'évolution de l'angle de sortie en fonction de la distance d1 entre M1 et M2 pour un télescope Korsch.

[Fig 16] La figure 16 illustre l'évolution de la distance $d_{EPC}$ entre la pupille de sortie du télescope et le plan focal en fonction de la distance d1 entre M1 et M2, pour un télescope Korsch.

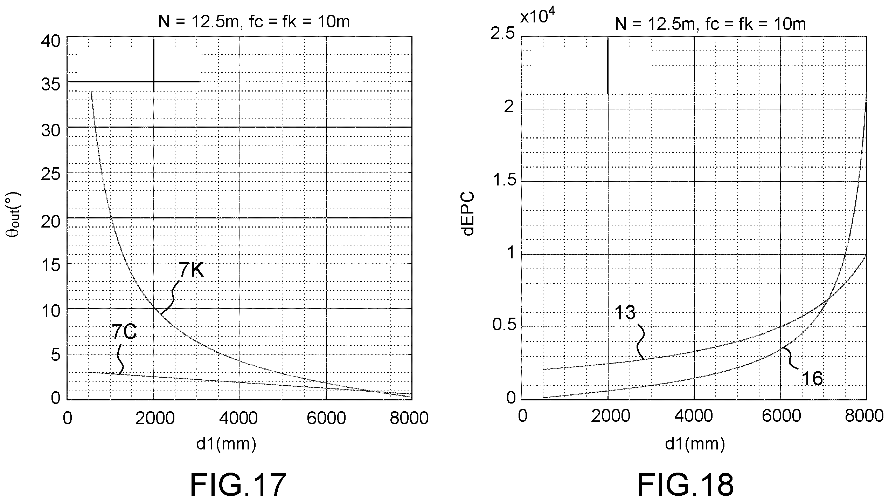

[Fig 17] La figure 17 compare l'évolution de l'angle de sortie le plus élevé en fonction de d1 pour un télescope Cassegrain et un Korsch.

[Fig 18] La figure 18 compare l'évolution de la distance $d_{EPC}$ en fonction de d1 pour un télescope Cassegrain et un Korsch.

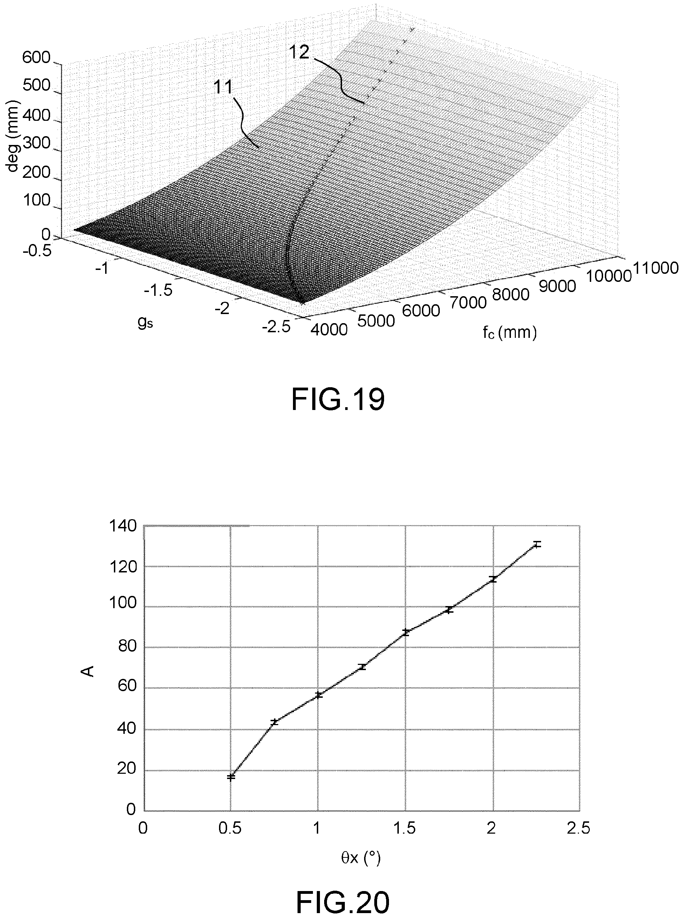

[Fig 19] La figure 19 illustre la loi qui permet de déterminer la distance optimale dseg entre le plan focal intermédiaire et le plan des miroirs de segmentation en fonction de la focale du télescope initial et du grandissement du module de segmentation.

[Fig 20] La figure 20 illustre la variation du coefficient A de l'interpolation de degré 2 en fonction du champ d'entrée selon X $\Theta$x.

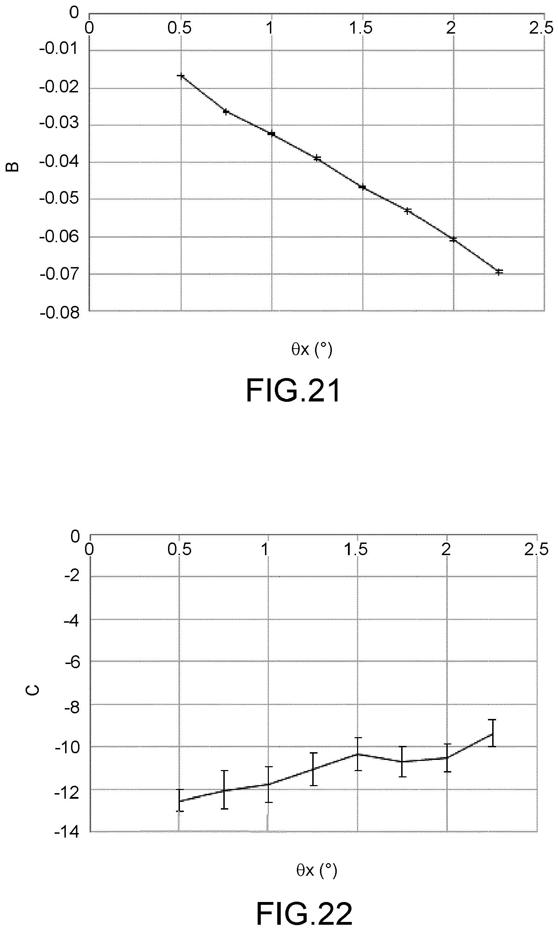

[Fig 21] La figure 21 illustre la variation du coefficient B de l'interpolation de degré 2 en fonction du champ d'entrée selon X $\Theta$x.

[Fig 22] La figure 22 illustre la variation du coefficient C de l'interpolation de degré 2 en fonction du champ d'entrée selon X $\Theta$x.

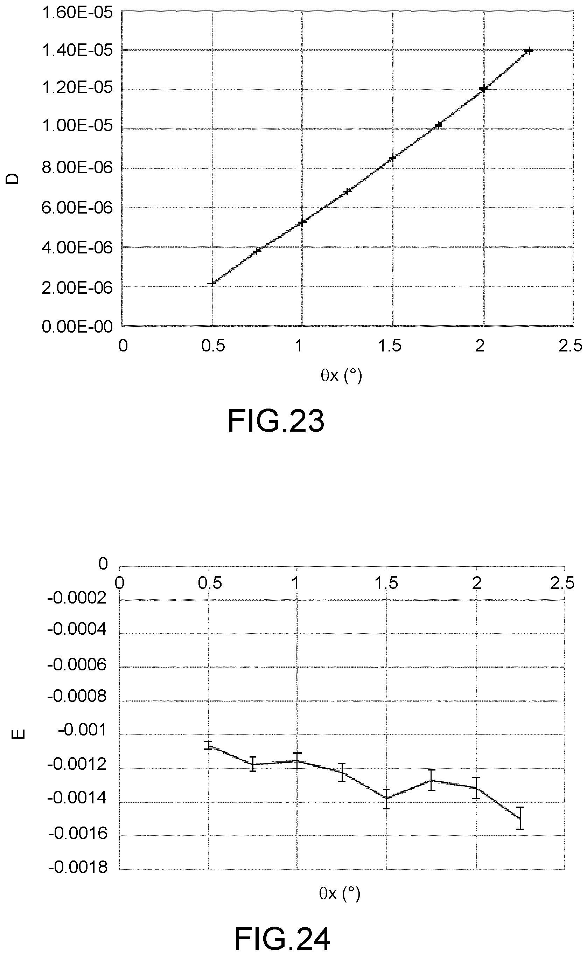

[Fig 23] La figure 23 illustre la variation du coefficient D de l'interpolation de degré 2 en fonction du champ d'entrée selon X $\Theta$x.

[Fig 24] La figure 24 illustre la variation du coefficient E de l'interpolation de degré 2 en fonction du champ d'entrée selon X $\Theta$x.

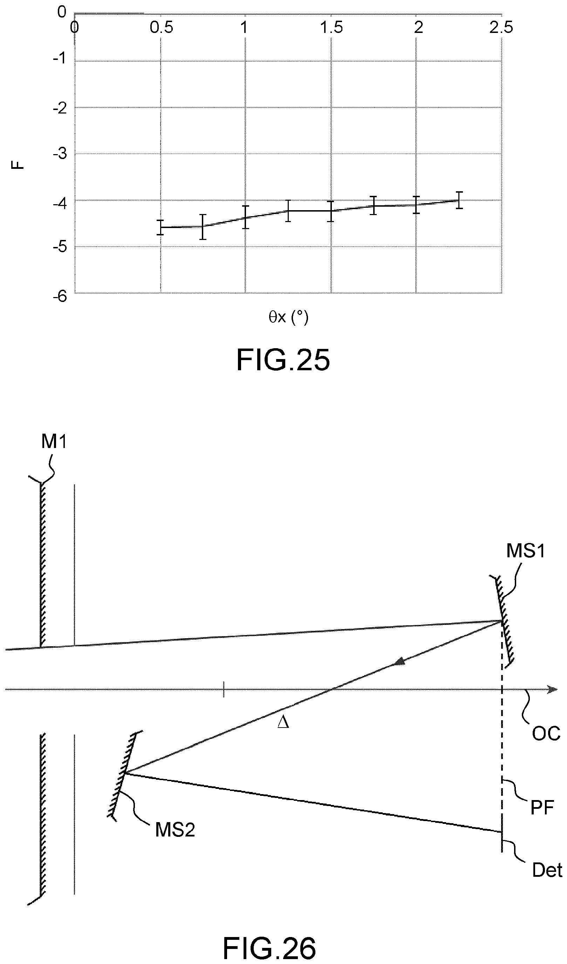

[Fig 25] La figure 25 illustre la variation du coefficient F de l'interpolation de degré 2 en fonction du champ d'entrée selon X $\Theta$x.

[Fig 26] La figure 26 illustre un exemple d'agencement, vu de côté, du module de segmentation par rapport au miroir primaire M1 du télescope initial, pour un télescope selon l'invention.

## DESCRIPTION DETAILLEE DE L'INVENTION

L'invention consiste à associer un télescope à 2 miroirs (télescope initial) et un module de segmentation tel que réalisé initialement pour le télescope Korsch. Tout type de télescope à 2 miroirs fonctionnant en mode infini/foyer est utilisable pour l'invention. Préférentiellement le télescope initial est un télescope RC/C tel que décrit précédemment, car ce sont des télescopes catadioptriques.

La figure 6 illustre une vue en perspective du télescope initial à deux miroirs Tel utilisé en « push broom » avec un plan focal PFc dans lequel une image Ii de l'infini est réalisée le long d'un axe X perpendiculaire à l'axe optique du système (plan focal XY perpendiculaire à l'axe optique). L'image Ii utilisée en mode « push broom » présente une dimension selon X (dimension linéaire) très supérieure à sa dimension selon Y. En effet en mode « push broom » seule la partie du champ située au voisinage de l'axe X présente un intérêt, l'information selon Y étant obtenue par défilement, et ce sont les détecteurs, disposés uniquement à cet endroit, qui définissent l'image Ii contenue dans le plan focal PFc.

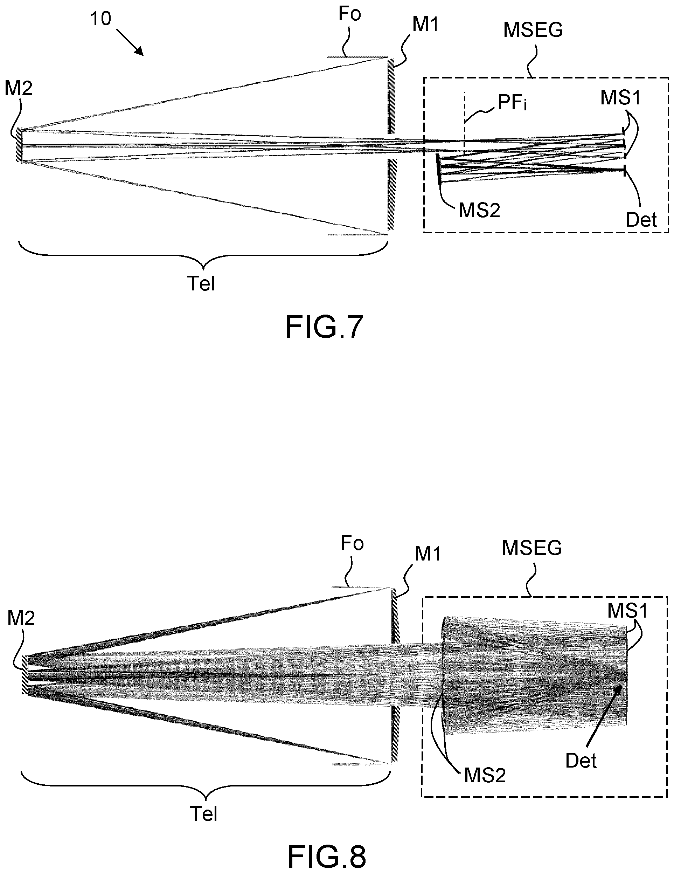

La figure 7 illustre un télescope 10 selon l'invention vu de profil et la figure 8 illustre le télescope 10 selon l'invention vue de dessus. Le télescope 10 selon l'invention comprend un télescope initial Tel à 2 miroirs, préférentiellement de type Ritchey -Chrétien ou Cassegrain, comprenant un premier miroir M1 concave et un deuxième miroir M2 convexe configurés de sorte qu'ils forment d'un faisceau lumineux F0 provenant de l'infini une image dénommée image intermédiaire Ii dans un plan focal dénommé plan focal intermédiaire PFi, l'image intermédiaire présentant sa plus grande dimension selon l'axe X perpendiculaire à l'axe optique du télescope (en comparaison à la dimension selon l'axe Y perpendiculaire à X). On entend par plus grande dimension selon X le fait que dans l'image globale réalisée par le télescope Tel au plan focal intermédiaire PFi, seule la partie au voisinage de l'axe X présente un intérêt et définit l'image intermédiaire Ii.

Le télescope 10 selon l'invention comprend également un module de segmentation MSEG.

Le module MSEG comprend un premier ensemble de n miroirs de segmentation MS1 disposés en aval du plan focal intermédiaire et configurés pour découper l'image intermédiaire issue du plan focal intermédiaire en n imagettes. Ces miroirs MS1 prélèvent uniquement la portion de champs qui aurait été détectée par les détecteurs du télescope Tel s'ils avaient existé.

Le module MSEG comprend également un deuxième ensemble de n miroirs de refocalisation MS2 configurés pour réimager lesdites n imagettes en n images dans un plan focal PF du télescope, lesdites images étant agencées dans le plan focal PF de manière à réduire la dimension selon l'axe X contenant les n images. Les n images sont par exemple exactement superposées l'une en dessous de l'autre, mais peuvent également être décalées.

Enfin le module de segmentation comprend un dispositif de détection Det disposé dans le plan focal PF. On entend par dispositif de détection un détecteur au sens large, pouvant être matriciel et/ou composé d'une superposition de barrettes et/ou d'une mosaïque de détecteurs élémentaires par exemple.

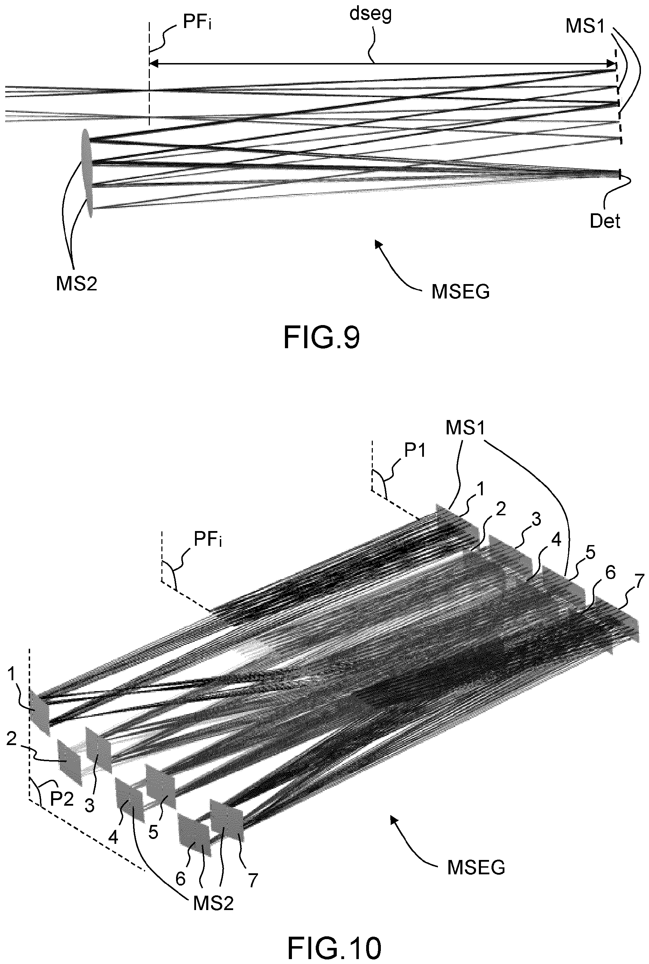

Les figures 9 et 10 représentent le module de segmentation respectivement selon une vue de profil et en perspective, pour un exemple avec n=7 et selon une première variante de l'invention, dans laquelle les miroirs MS1 sont tous situés dans un même plan P1 et les miroirs MS2 sont également tous situés dans un même plan P2. La focale du télescope est identique pour tous les points du champ de vue. Dans cette variante le module de segmentation est de même type que celui décrit dans la publication Jahn et al précitée. Les miroirs de segmentation MS1 sont numérotés de 1 à 7 et les miroirs de segmentation MS2 associé à chacun des miroirs MS1 portent un numéro identique. L'exemple choisi est de 7 voies (une voie correspond à l'association d'un miroir de segmentation et du miroir de refocalisation associé), et chaque voie est représentée par un niveau de gris différent sur la figure 10. Avec n voies on réduit la taille linéaire du plan focal d'un facteur n, ici 7, mais d'autres paramètres missions peuvent amener à un nombre différent de voies. De même, l'agencement dans l'espace des ensembles de miroirs MS1 et MS2 a été choisi comme tel pour des raisons d'encombrement et de qualité image mais beaucoup d'autres arrangements différents sont possibles.

Le dispositif de détection Det est illustré positionné dans ce même plan de manière arbitraire.

La combinaison d'un télescope à 2 miroirs, bien moins performant qu'un Korsch, avec un module de segmentation, n'est pas évidente, elle est même contre-intuitive. En effet le télescope et le module de segmentation étant optimisés indépendamment, on s'attend à obtenir une qualité d'image d'un Korsch segmenté bien meilleure que celle d'un RC/C segmenté. Or les inventeurs ont constaté que tel n'était pas le cas, et que le RC/C segmenté présentait une qualité d'image supérieure à celle d'un Korsch segmenté, de focale et d'ouverture identique. Par ailleurs le télescope RC/C segmenté présente un champ de vue supérieur au champ de vue d'un RC/C classique.

Après de nombreuses études et essais les inventeurs ont identifié l'origine de ce résultat contre intuitif.

Pour mettre en évidence cette origine, un télescope Cassegrain et un télescope Korsch vont être comparés selon un aspect particulier. On fixe la focale fc, et l'ouverture, le champ et la distance M2-PFc (M2-PFik pour le Korsch) égales à fc/5 pour les deux télescopes. La variable distance d1 entre M1 et M2 est laissée libre pour pouvoir optimiser chaque combinaison.

La figure 11 illustre les différentes distances et points d'intérêt pour un télescope Cassegrain : le point I est le point du plan image/focal PFc situé sur l'axe optique, d1 est la distance entre M1 et M2 d2 est la distance entre M2 et I, et $d_{EPC}$ est la distance entre la pupille de sortie PS et le point I. Le point F1 est le point focal du miroir primaire M1, les points S1, S2 sont les sommets des miroirs M1, M2.

Les paramètres du Cassegrain sont donnés par :

$$R_1 = \frac{2d_1 f_c}{f_c - d_2} \qquad R_2 = \frac{2d_1 d_2}{d_1 - d_2 + f_c} \qquad d_{EPC} = d_2 - \frac{R_2 d_1}{R_2 + 2d_1}$$

R1 et R2 rayons de courbure des miroirs M1 et M2.

Si on fixe : la focale fc à 10m ; la distance d2 par exemple à fc/5 ; le diamètre D du M1 à D=0.8 m, la seule variable du système est la distance d1. Par ailleurs l'ouverture N = fc/D est égale à 12.5.

On définit θout comme l'angle de sortie du rayon principal de bord de champ du télescope initial Tel. Un rayon principal est un rayon issu du centre de la pupille de sortie. Le rayon principal de bord de champ est celui qui est issu du centre de la PS et est incident dans le plan image/focal au bord du champ (bord du détecteur pour un télescope classique). La figure 11bis illustre ce rayon pour un télescope à 2 miroirs pour lequel la pupille de sortie virtuelle est disposée derrière le M2.

La figure 12 décrit la variation (courbe TC) de l'angle θout en fonction de la distance d1, pour un télescope initial tel que précisé ci-dessus. La figure 13 illustre l'évolution de la distance $d_{EPC}$ en fonction de d1 (courbe CC).

Dans un télescope Cassegrain un point important pour l'invention est que la pupille de sortie PS est virtuelle et située derrière le miroir M2.

La figure 14 illustre les différentes distances et points d'intérêt pour un télescope Korsch : le point IM est le point du plan focal intermédiaire PFIk sur l'axe optique, et point I est le point du plan focal PFk situé sur l'axe optique, d1 est la distance entre M1 et M2 (la flèche donne le signe de cette distance), d2 est la distance entre M2 et IM, dIM est la distance entre IM et le troisième miroir M3, d3 est la distance entre M3 et I, $d_{EPK}$ est la distance entre la pupille de sortie du télescope initial et le point I. Pour un Korsch la pupille de sortie est située entre M3 et le point I.

Les paramètres du Korsch sont donnés par :

$$R_1 = \frac{2d_1 f_K}{f_K + d_2 m_3} \qquad R_2 = \frac{2d_2 m_3 R_1}{m_3 R_1 - 2f_K} \qquad R_3 = \frac{R_1 R_2}{R_1 - R_2} \qquad d_{IM} = \frac{1 - m_3}{2m_3} R_3 \qquad d_3 = m_3 d_{IM}$$

$$d_{EPK} = d_3 - R_3 \frac{R_2 d_1 - (d_2 + d_{IM})(R_2 + 2d_1)}{2R_2 d_1 - 2(d_2 + d_{IM})(R_2 + 2d_1) - R_3(R_2 + 2d_1)}$$

R1, R2 et R3 sont les rayons de courbures de M1, M2 et M3.

On fixe : la focale fk = fc = 10m, la distance d2 à fk/5; le diamètre D du M1 à D=0.8 m, Le grandissement m3 du M3 est fixé à -0.95, valeur classique, la seule variable du système est la distance d1. Par ailleurs l'ouverture N valant fc/D est égale à 12.5. On choisit également un champ égal pour les deux télescopes.

La figure 15 illustre la variation de l'angle θout (courbe TK) en fonction de la distance d1, pour fc=fk=10m et N = 12.5m. La figure 16 illustre l'évolution de la distance $d_{EPK}$ en fonction de d1 (courbe CK).

Dans un télescope Korsch un point important pour l'invention est que la pupille de sortie PS est réelle et située entre le miroir M3 et I.

La figure 17 compare les courbes TC et TK et la figure 18 compare les courbes CC et CK. Les deux télescopes comparés présentent une focale, un distance d2, une ouverture et un champ identiques. On constate que les valeurs d'angles θout pour le Cassegrain sont bien inférieures à celles pour le Korsch, à d1 égales. Les valeurs de θout sont directement corrélées à la distance $d_{EPC}$ / $d_{EPK}$ entre la pupille de sortie et le plan focal/image : plus la pupille de sortie est éloignée du plan focal plus les angles θout sont faibles. Et on constate en effet sur la figure 18 qu'à distances d1 égales, les valeurs de $d_{EPC}$ pour un Cassegrain sont supérieures aux valeurs $d_{EPK}$ pour un Korsch, jusqu'à une distance d1 de 7m (distance qui n'est jamais choisie aussi grande en pratique). Typiquement pour une focale de 10m et D = 0.8 m, une distance d1 inférieure à 2m est choisie.

La comparaison de ces courbes permet d'expliquer la meilleure qualité d'image du Cassegrain segmenté versus le Korsch segmenté : les angles d'incidence sur les miroirs de segmentation sont beaucoup plus faibles dans le cas du Cassegrain, ce qui implique une minimisation des aberrations au sein du système. Et cet avantage du Cassegrain permet l'obtention d'une image finale de meilleure qualité bien que le télescope Cassegrain isolé soit beaucoup moins bon que le Korsch.

Selon un mode de réalisation préféré la distance optimale dseg entre le plan focal intermédiaire PFi et le plan P1 dans lequel sont disposés les miroirs MS1 est obtenue par une loi prédéterminée, et est au moins fonction de la focale initiale du télescope fc et du grandissement de la segmentation gs, définit par :

$$g_s = \frac{Taille\ selon\ Y\ de\ l'image\ finale}{Taille\ selon\ Y\ de\ l'image\ dans\ plan\ focal\ interm\acute{e}diaire}$$

Le positionnement à une distance optimale dseg des miroirs MS1 permet un fonctionnement amélioré du télescope segmenté 10 selon l'invention au niveau de l'arrangement opto-mécanique (encombrement). Préférentiellement cette distance dseg doit être respectée à +/- 20%, voire +/-10%, c'est à dire que la distance entre le plan focal intermédiaire PFi et le plan P1 doit être comprise dans une plage [dseg-20%, dseg+20%], voire [dseg-10%, dseg+10%] .

La valeur de dseg est fonction au premier ordre de gs et fc, et au deuxième ordre des paramètres du télescope Cassegrain (ex: distances entre miroirs) et de ceux du module de segmentation (nombres de miroirs ms1/ms2, dimensions de chacun de ces miroirs, espacement entre eux...). Elle est également fonction du champ d'entrée du télescope initial (champ de vue) qui est typiquement compris entre 0.5° et 2.5° pour les applications d'observation de la terre, et plus particulièrement fonction du champ d'entrée selon l'axe X dénommé $\Theta x$.

La loi permettant de déterminer dseg est ainsi fonction de multiples variables et paramètres. La figure 19 illustre une représentation graphique tridimensionnelle de cette loi, en fonction de fc et gs, pour un champ de vue $\Theta x = 1.5°$ et des paramètres du télescope et du module de segmentation permettant un encombrement réduit. La surface 11 représente les différentes valeurs de dseg déterminées en fonction du couple (fc, gs). La courbe 12 illustre les valeurs de dseg pour lesquelles la focale du télescope segmenté F est choisie égale à 10 m (F = fc*gs).

Les inventeurs ont pu montrer que la valeur de dseg pouvait être approximée, avec une précision supérieure à 5%, par une interpolation polynomiale de degré 2 de type :

$$\text{desg} = A + B*fc + C*gs + D*fc^2 + E*fc*gs + F*gs^2$$

Les coefficients A à F sont fonction au premier ordre du champ d'entrée selon l'axe X $\Theta x$. Un exemple de variation de ces coefficients en fonction de $\Theta x$ est illustré figures 20 à 26. La figure 20 illustre la variation A($\Theta x$), la figure 21 B($\Theta x$), la figure 22 C(Ox), la figure 23 D(Ox), la figure 24 E($\Theta x$), et la figure 25 F(Ox), dans le système d'unités international.

On remarque sur ces courbes que typiquement le coefficient A est compris dans l'intervalle [10;140], le coefficient B dans l'intervalle [-0.075;-0.01], le coefficient C dans l'intervalle [-14;-8], le coefficient D dans l'intervalle [$10^{-6}$; $15.10^{-6}$], le coefficient E dans l'intervalle [$-1.610^{-3}$; $-10^{-3}$], et le coefficient F dans l'intervalle [-5;-2].

La barre d'erreur illustre la sensibilité du coefficient à l'interpolation. Pour une valeur du coefficient comprise dans la barre d'erreur, l'interpolation est précise à plus de 95% de la valeur cible.

Pour l'exemple de la figure 9 l'erreur d'interpolation est inférieure à 3mm.

Une mode d'agencement préféré du module de segmentation MSEG par rapport au télescope initial Tel est illustré figure 26. Une fois la position des MS1 déterminée, typiquement par la formule (1), on cherche à utiliser au maximum l'espace entre MS1 et M1 en positionnant MS2 à une distance ∆ souhaitée la plus grande possible, en plaçant les MS2 aussi proche que possible du M1. L'axe OC est l'axe optique du télescope à 2 miroirs initial Tel.

La focale finale du télescope F est fixée par la résolution au sol souhaitée, le détecteur est positionné dans le plan des MS1 arbitrairement: cela simplifie les calculs, simplifie la mécanique du télescope et permet d'avoir la plus grande distance MS2-image tout en conservant un encombrement faible (le détecteur ne « dépasse pas » derrière les MS1).

Selon une deuxième variante de l'invention les miroirs MS1 du premier ensemble et les miroirs MS2 du deuxième ensemble sont disposés dans au moins deux plans différents perpendiculaires à l'axe optique. Les miroirs d'une voie i sont configurés pour présenter une focale associée fi, et toutes les voies sont configurées pour réaliser les images dans ledit plan focal PF, les différences de longueur entre les focales étant compensées par la position des miroirs MS1 et MS2. Ainsi le télescope présente une focale différente en fonction du point du champ de vue. L'intérêt de ce système est de garder une résolution au sol constante sur de très grands champs, lorsque la courbure de la Terre entre en jeu.

## Revendications

1. Télescope (10) comprenant :

   - un télescope initial (Tel) comprenant un premier miroir (M1) concave et un deuxième miroir (M2) convexe configurés de sorte qu'ils forment d'un faisceau lumineux (F0) provenant de l'infini une image dénommée image intermédiaire (Ii) dans un plan focal dénommé plan focal intermédiaire (PFi), ladite image intermédiaire présentant une plus grande dimension selon un axe X perpendiculaire à un axe optique du télescope,
   - un module de segmentation (MSEG) comprenant :

      *un premier ensemble de n miroirs de segmentation (MS1) disposés en aval du plan focal intermédiaire et configurés pour découper l'image intermédiaire issue du plan focal intermédiaire en n imagettes,
      *un deuxième ensemble de n miroirs de refocalisation (MS2) configurés pour réimager lesdites n imagettes en n images dans un plan focal (PF) du télescope, lesdites images étant agencées dans ledit plan focal de manière à réduire la dimension selon X contenant les n images,

- un dispositif de détection (Det) disposé dans ledit plan focal (PF).

**2.** . Télescope selon la revendication précédente dans lequel le télescope initial est de type Ritchey-Chrétien ou Cassegrain.

**3.** Télescope selon l'une des revendications précédentes dans lequel les miroirs (MS1) du premier ensemble sont disposés dans un même plan P1 perpendiculaire audit axe optique.

**4.** Télescope selon la revendication précédente dans lequel une distance entre le plan focal intermédiaire (PFi) et ledit plan P1 est comprise dans une plage [dseg-20%, dseg+20%] avec dseg distance déterminée au moins en fonction d'une focale du télescope initial (fc) et d'un grandissement du module de segmentation (gs) selon une loi prédéterminée présentant la forme d'une interpolation polynomiale de degré 2 de type :

$$desg = A + B{*}fc + C{*}gs + D{*}fc^2 + E{*}fc{*}gs + F{*}gs^2$$

les coefficients A à F étant déterminés en fonction d'un champ d'entrée selon l'axe X ($\Theta x$).

**5.** . Télescope selon l'une des revendications 1 ou 2 dans lequel les miroirs (MS1) du premier ensemble et les miroirs (MS2) du deuxième ensemble sont disposés dans au moins deux plans différents perpendiculaires à l'axe optique, une voie comprenant un miroir de segmentation et un miroir de focalisation associé, une voie présentant une focale associée, toutes les voies étant configurées pour réaliser lesdites images dans ledit plan focal (PF).

**Patentansprüche**

**1.** Teleskop (10), Folgendes umfassend:

- ein Anfangsteleskop (Tel), umfassend einen konkaven ersten Spiegel (M1) und einen konvexen zweiten Spiegel (M2), die so konfiguriert sind, dass sie von einem Lichtstrahl (F0), der aus dem Unendlichen kommt, ein Bild erzeugen, das Zwischenbild (Ii) genannt wird, in einer Brennebene, die Zwischenbrennebene (PFi) genannt wird, wobei das Zwischenbild eine größere Abmessung entlang einer Achse X aufweist, die senkrecht zu einer optischen Achse des Teleskops verläuft,
- ein Segmentierungsmodul (MSEG), Folgendes umfassend:

* einen ersten Satz von n Segmentierungsspiegeln (MS1), die im nachgelagerten Bereich der Zwischenbrennebene angeordnet und konfiguriert sind, um das aus der Zwischenbrennebene stammende Zwischenbild in n Teilbilder zu zerlegen,
* einen zweiten Satz von n Neufokussierungsspiegeln (MS2), die konfiguriert sind, um die n Teilbilder in einer Brennebene (PF) des Teleskops in n Bilder neu zu erzeugen, wobei die Bilder in der Brennebene so angeordnet sind, dass die Abmessung entlang X, welche die n Bilder enthält, reduziert wird,

- eine Erfassungsvorrichtung (Det), die in der Brennebene (PF) angeordnet ist.

**2.** Teleskop nach dem vorhergehenden Anspruch, wobei das Anfangsteleskop vom Typ Ritchey-Chrétien oder Cassegrain ist.

**3.** Teleskop nach einem der vorhergehenden Ansprüche, wobei die Spiegel (MS1) des ersten Satzes in einer gleichen Ebene P1 senkrecht zur optischen Achse angeordnet sind.

**4.** Teleskop nach dem vorhergehenden Anspruch, wobei ein Abstand zwischen der Zwischenbrennebene (PFi) und der Ebene P1 in einem Bereich [dseg-20 %, dseg+20 %] liegt, wobei dseg ein Abstand ist, der mindestens in Abhängigkeit von einer Brennweite (fc) des Anfangsteleskops und einer Vergrößerung des Segmentierungsmoduls (gs) gemäß einem vorbestimmten Gesetz bestimmt wird, das die Form einer Polynominterpolation des Grades 2 vom Typ aufweist:

$$\text{desg} = A + B*fc + C*gs + D*fc^2 + E*fc*gs + F*gs^2$$

wobei die Koeffizienten A bis F in Abhängigkeit von einem Eingangsfeld (Θx) entlang der X-Achse bestimmt werden.

5. Teleskop nach einem der Ansprüche 1 oder 2, wobei die Spiegel (MS1) des ersten Satzes und die Spiegel (MS2) des zweiten Satzes in mindestens zwei verschiedenen Ebenen senkrecht zur optischen Achse angeordnet sind, wobei ein Weg einen Segmentierungsspiegel und einen zugehörigen Fokussierungsspiegel umfasst, ein Weg eine zugehörige Brennweite aufweist und alle Wege konfiguriert sind, um die Bilder in der Brennebene (PF) zu erzeugen.

**Claims**

1. A telescope (10) comprising:

   - an initial telescope (Tel) comprising a concave first mirror (M1) and a convex second mirror (M2) that are configured so that they form, from a light beam (F0) coming from infinity, an image called the intermediate image (Ii) in a focal plane called the intermediate focal plane (PFi), said intermediate image having a largest dimension along an X-axis perpendicular to an optical axis of the telescope,
   - a segmenting module (MSEG) comprising:

      * a first set of n segmenting mirrors (MS1) that are placed downstream of the intermediate focal plane and that are configured to divide the intermediate image obtained from the intermediate focal plane into n sub-images,
      * a second set of n refocusing mirrors (MS2) that are configured to reimage said n sub-images into n images in a focal plane (PF) of the telescope, said images being arranged in said focal plane so as to decrease the dimension along X containing the n images,

   - a detecting device (Det) placed in said focal plane (PF).

2. The telescope according to the preceding claim, wherein the initial telescope is of Ritchey-Chrétien or Cassegrain type.

3. The telescope according to one of the preceding claims, wherein the mirrors (MS1) of the first set are placed in a same plane P1 perpendicular to said optical axis.

4. The telescope according to the preceding claim, wherein a distance between the intermediate focal plane (PFi) and said plane P1 is comprised in a range [dseg-20%, dseg+20%] with dseg a distance determined at least depending on a focal length (fc) of the initial telescope and on a magnification (gs) of the segmenting module, according to a preset relationship taking the form of a polynomial interpolation of degree 2 of type:

$$\text{desg} = A + B*fc + C*gs + D*fc^2 + E*fc*gs + F*gs^2$$

the coefficients A to F being determined depending on an entrance field (Θx) along the X-axis.

5. The telescope according to any of claims 1 or 2, wherein the mirrors (MS1) of the first set and the mirrors (MS2) of the second set are placed in at least two different planes perpendicular to the optical axis, a channel comprising a segmenting mirror and an associated focusing mirror, a channel having an associated focal length, all the channels being configured to form said images in said focal plane (PF).

FIG.1

FIG.2

FIG.3

FIG.4

PF$_k$

x

PF$_{kf}$

Det

x

## FIG.5

Tel

M2

Fo

M1

PF$_c$

I$_i$

x

## FIG.6

FIG.7

FIG.8

FIG.9

FIG.10

## FIG.11

## FIG.11bis

FIG.13

FIG.12

**FIG.14**

EP 3 798 710 B1

N = 12.5m, $f_k$ = 10m

$\theta_{out}(°)$

TK

d1(mm)

**FIG.15**

N = 12.5m, $f_k$ = 10m

×10⁴

dEPK

CK

d1(mm)

**FIG.16**

**FIG.18**

N = 12.5m, fc = fk = 10m

dEPC

x10⁴

16

13

d1(mm)

**FIG.17**

N = 12.5m, fc = fk = 10m

$\theta_{out}$(°)

7K

7C

d1(mm)

FIG.19

FIG.20

FIG.21

FIG.22

FIG.23

FIG.24

FIG.25

FIG.26

## RÉFÉRENCES CITÉES DANS LA DESCRIPTION

**Documents brevets cités dans la description**

- US 2018164573 A

- US 2010202073 A

**Littérature non-brevet citée dans la description**

- **JAHN et al.** Innovative focal plane design for large space telescope using freeform mirrors. *Optica,* 2017, vol. 4 (10), 1188-1195

- **DE DOLKENS et al.** Design and end-to-end modelling of a deployable telescope. *proceeding SPIE,* 2017, vol. 10562